# EUROPEAN PATENT SPECIFICATION

(11) **EP 3 604 023 B1**
(45) Date of publication and mention of the grant of the patent: **29.05.2024**
(21) Application number: 18775746.3
(22) Date of filing: 29.03.2018
(51) Int. Cl.: B60K 6/00, B60W 10/00, B60W 20/00, B60L 50/16

(54) **HYBRID ELECTRIC VEHICLE AND POWER SYSTEM THEREOF**
HYBRID-ELEKTROFAHRZEUG UND ANTRIEBSSYSTEM DAFÜR
VÉHICULE ÉLECTRIQUE HYBRIDE ET SON SYSTÈME D'ALIMENTATION

(30) Priority: 31.03.2017 CN 201710210204
(43) Date of publication of application: 05.02.2020
(73) Proprietor: BYD Company Limited, Shenzhen, Guangdong 518118 (CN)
(72) Inventor: WANG, Chunsheng, Shenzhen Guangdong 518118 (CN); LI, Kaiqi, Shenzhen Guangdong 518118 (CN); ZHANG, Wei, Shenzhen Guangdong 518118 (CN)
(74) Representative: Gulde & Partner
(86) International application number: PCT/CN2018/081046
(87) International publication number: WO 2018/177359

(56) References cited:
- EP-A1- 1 612 085
- WO-A1-00/32438
- WO-A1-2017/013843
- CN-A- 101 774 379
- CN-A- 104 627 171
- CN-B- 102 118 113
- CN-U- 204 432 353
- JP-A- 2000 253 507
- US-A1- 2009 237 019
- US-A1- 2012 143 425
- Linear Technology: "TYPICAL APPLICATION FEATURES APPLICATIONS DESCRIPTION High Voltage Synchronous Current Mode Step-Down Controller with Adjustable Operating Frequency High Voltage Operation", , 12 February 2017 (2017-02-12), XP055673252, Retrieved from the Internet: URL:http://www.farnell.com/datasheets/8509 2.pdf [retrieved on 2020-03-03]
- XIANCHENG ZHENG ET AL: "A Droop Control Based Three Phase Bidirectional AC-DC Converter for More Electric Aircraft Applications", ENERGIES, vol. 10, no. 3, 20 March 2017 (2017-03-20) , page 400, XP055672700, DOI: 10.3390/en10030400
- J. G Oliveira ET AL: "Implementation and Control of an AC/DC/AC Converter for Double Wound Flywheel Application", Advances in Power Electronics, 1 January 2012 (2012-01-01), pages 1-8, XP055673144, DOI: 10.1155/2012/604703 Retrieved from the Internet: URL:https://pdfs.semanticscholar.org/ab72/ 146b3875c6982a63bf7da8a2a1598b99f667.pdf?_ ga=2.91830674.965424376.1583236577-3398172 56.1583236577

## Description

### FIELD

The present invention relates to the technical field of hybrid power vehicles, and particularly relates to a power system of a hybrid power vehicle and the hybrid power vehicle.

### BACKGROUND

In a hybrid power vehicle, the voltage output by a motor during power generation is rectified by an inverter to charge a power battery, in this case, the voltage of the output end of the inverter is not controlled, however, because the output end is connected in parallel with the power battery, the power battery is equivalent to a huge capacitive load which can stabilize the voltage on a main circuit so as to cause little influence on a DC-DC converter at a latter stage. Furthermore, a high voltage can be directly reduced by the DC-DC converter to a low voltage such as 12V so as to supply power to the low-voltage apparatus of the entire vehicle.

However, once the power battery is disconnected, the voltage output by the motor during power generation can not be controlled, so that it is necessary to stabilize the voltage output by the motor during power generation to be configured to subsequent loads. Because the voltage at the inverter end fluctuates greatly, the magnitude and frequency of the counter electromotive force output by the motor are changed with the change of the load (namely the change of the rotation speed of the engine). For example, when the rotation speed is high, the counter electromotive force is very high, the voltage output by rectification and voltage stabilizing is very high. If a brake rectification mode is adopted, the output voltage cannot be controlled once the power battery is disconnected. If uncontrollable rectification is adopted, the loss is very large.

WO 2017/013843 A1 discloses a power source for a vehicle with an engine and a motor connected to one axis. The engine is driving an auxiliary motor to charge a first battery through a DC/DC converter, supply the motor through an inverter, charge a secondary battery or supply a load.

US 2012/143425 A1 discloses a parallel electric drive system for a vehicle, where an engine is connected to one axis and a motor is connected to a second axis. The engine is driving an auxiliary motor which can supply the motor on the reat axis, as well as charge a battery through a DC/DC converter or supply several loads. Depending on how a set of switches are switched the motor can also be supplied from the battery which was previously charged by the auxiliary motor.

EP 1 612 085 A1 discloses serial electric drive system for a vehicle, where an engine is connected to a motor through a planetary gear and the motor is connected to an axis. The axis can either be driven from the motor or from the engine with the motor being in idle mode. Also connected to the planetary gear is a second motor. Both, first and second motor are connected to inverters and step-up circuits to either charge master and slave batteries or to supply a low-voltage battery through a DC/DC converter.

### SUMMARY

The present invention is directed to subject matter as defined in the appended set of claims.

An objective of the present invention is to at least resolve one of the technical problems in the related art to some extent.

Therefore, one objective of the present invention is to provide a power system of a hybrid power vehicle. The power system is capable of maintaining the low-speed electric balance and low-speed smoothness of the entire vehicle, stabilizing the input voltage of the DC-DC converter, and ensuring the normal work of the DC-DC converter.

Another objective of the present invention is to provide a hybrid power vehicle.

In order to achieve the above objective, according to the first aspect of the present invention, the embodiment provides a power system of a hybrid power vehicle, including: an engine, outputting power to a wheel of the hybrid power vehicle through a clutch; a power motor, configured to output driving force to the wheel of the hybrid power vehicle; a power battery, configured to supply power to the power motor; a DC-DC converter; an auxiliary motor, connected with the engine and respectively connected with the power motor, the DC-DC converter and the power battery; and a voltage stabilizing circuit, connected between the auxiliary motor and the DC-DC converter and configured to perform voltage stabilizing treatment on the DC output to the DC-DC converter when the auxiliary motor generates power.

In the power system of a hybrid power vehicle according to the embodiment of the present invention, the engine outputs power to the wheel of the hybrid power vehicle through a clutch, the power motor outputs driving force to the wheel of the hybrid power vehicle, the power battery supplies power to the power motor, and the voltage stabilizing circuit performs voltage stabilizing treatment on the DC output to the DC-DC converter when the auxiliary motor generates power, thereby maintaining the low-speed electric balance and low-speed smoothness of the entire vehicle, improving the properties of the entire vehicle, stabilizing the input voltage of the DC-DC converter, and ensuring the normal work of the DC-DC converter.

Further, the present invention provides a hybrid power vehicle, including the above power system of the hybrid power vehicle of the present invention.

In the hybrid power vehicle according to the embodiment of the present invention, through the above power system of the hybrid power vehicle, the input voltage of the DC-DC converter can be kept stabilized in case that the power battery fails, thereby ensuring the normal work of the DC-DC converter.

### BRIEF DESCRIPTION OF THE DRAWINGS

These and other aspects and advantages of embodiments of the present invention will become apparent and more readily appreciated from the following descriptions made with reference to the drawings, in which:
Fig. 1 is a structure block diagram of a power system of a hybrid power vehicle according to an embodiment of the present invention;
Fig. 2a is a structure diagram of a power system of a hybrid power vehicle according to an embodiment of the present invention;
Fig. 2b is a structure diagram of a power system of a hybrid power vehicle according to another embodiment of the present invention;
Fig. 2c is a structure diagram of a power system of a hybrid power vehicle not falling within the claimed invention.
Fig. 3 is a structure block diagram of a voltage stabilizing circuit according to an embodiment of the present invention;
Fig. 4 is a schematic diagram of voltage stabilizing control according to an embodiment of the present invention;
Fig. 5 is a structure block diagram of a power system of a hybrid power vehicle according to a specific embodiment of the present invention; and
Fig. 6 is a structure block diagram of a hybrid power vehicle according to an embodiment of the present invention.

### DETAILED DESCRIPTION

The following describes in detail embodiments of the present invention. Examples of the embodiments are shown in the accompanying drawings, where reference signs that are the same or similar from beginning to end represent same or similar components or components that have same or similar functions. The following embodiments described with reference to the accompanying drawings are exemplary, and are intended to describe the present invention and cannot be construed as a limitation to the present invention.

A power system of a hybrid power vehicle and the hybrid power vehicle provided according to the embodiments of the present invention are described below with reference to the accompanying drawings.

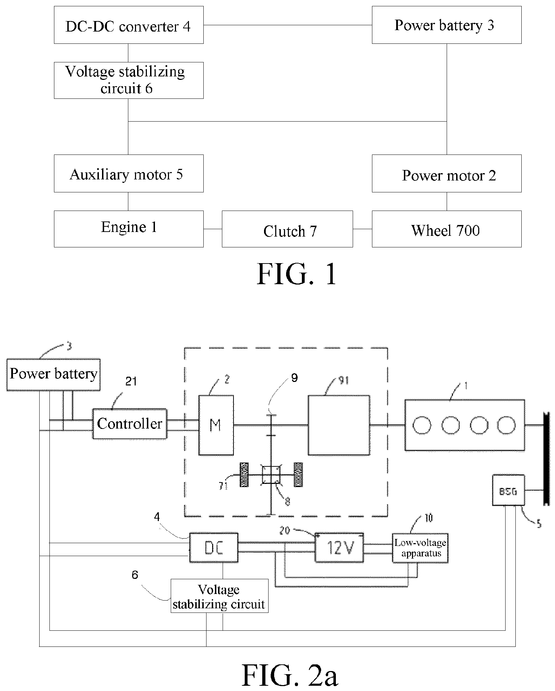

Fig. 1 is a structure block diagram of a power system of a hybrid power vehicle according to an embodiment of the present invention. As shown in Fig. 1, the power system of a hybrid power vehicle includes: an engine 1, a power motor 2, a power battery 3, a DC-DC converter 4, an auxiliary motor 5 and a voltage stabilizing circuit 6.

As shown in Fig. 1 to Fig. 3, the engine 1 outputs power to a wheel 700 of the hybrid power vehicle through a clutch 7, and the power motor 2 is configured to output driving force to the wheel 700 of the hybrid power vehicle. That is, the power system according to the embodiment of the present invention can supply power for normal running of the hybrid power vehicle through the engine 1 and/or the power motor 2. In other words, in some embodiments of the present invention, the power source of the power system may be the engine 1 and the power motor 2, any one of the engine 1 and the power motor 2 can separately output power to the wheel 700, or the engine 1 and the power motor 2 can simultaneously output power to the wheel 700.

The power battery 3 is configured to supply power to the power motor 2. The auxiliary motor 5 is connected with the engine 1. For example, the auxiliary motor 5 may be connected with the engine 1 through a gear train end of the engine 1, and the auxiliary motor 5 is respectively connected with the power motor 2, the DC-DC converter 4 and the power battery 3. The voltage stabilizing circuit 6 is connected between the auxiliary motor 5 and the DC-DC converter 4 and is configured to perform voltage stabilizing treatment on the DC output to the DC-DC converter 4 when the auxiliary motor 5 generates power, so that the stabilized voltage supplies power to the low-voltage apparatus of the entire vehicle through the DC-DC converter 4. In other words, after the power output by the auxiliary motor 5 during power generation passes through the voltage stabilizing circuit 6, a stabilized voltage is output to be supplied to the DC-DC converter 4.

Therefore, the power motor 2 and the auxiliary motor 5 can respectively serve as a driving motor and a generator in one-to-one correspondence, and then, the auxiliary motor 5 can have higher generating power and generating efficiency at a low speed, meeting the power demand for low-speed running, maintaining the low-speed electric balance of the entire vehicle, maintaining the low-speed smoothness, and improving the properties of the entire vehicle. Furthermore, the voltage stabilizing circuit 6 can perform voltage stabilizing treatment on the DC output to the DC-DC converter 4 when the auxiliary motor 5 generates power to stabilize the input voltage of the DC-DC converter 4, thereby ensuring the normal work of the DC-DC converter.

Further, when driven by the engine 1 to generate power, the auxiliary motor 5 can realize at least one of charging the power battery 3, supplying power to the power motor 2 and supplying power to the DC-DC converter 4. In other words, the engine 1 can drive the auxiliary motor 5 to generate power, and the power generated by the auxiliary motor 5 can be supplied to at least one of the power battery 3, the power motor 2 and the DC-DC converter 4. It should be understood that the engine 1 can drive the auxiliary motor 5 to generate power while outputting power to a wheel 8, and also can separately drive the auxiliary motor 5 to generate power.

The auxiliary motor 5 may be a BSG motor. It should be noted that the auxiliary motor 5 is a high-voltage motor. For example, the generating voltage of the auxiliary motor 5 is equivalent to the voltage of the power battery 3, so that the power generated by the auxiliary motor 5 can directly charge the power battery 3 without voltage conversion, and can also be supplied to the power motor 2 and/or the DC-DC converter 4. Furthermore, the auxiliary motor 5 may also be an efficient generator. For example, when the auxiliary motor 5 is driven by the engine 1 at an idle speed to generate power, 97% or more of the generating efficiency can be achieved.

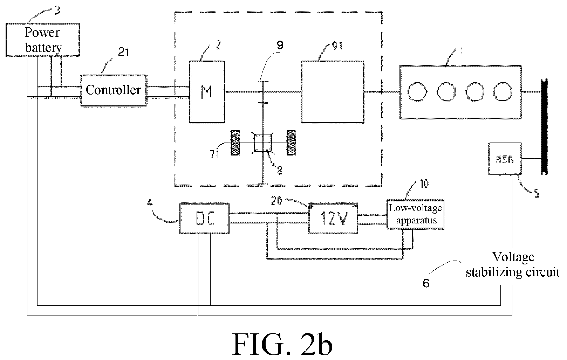

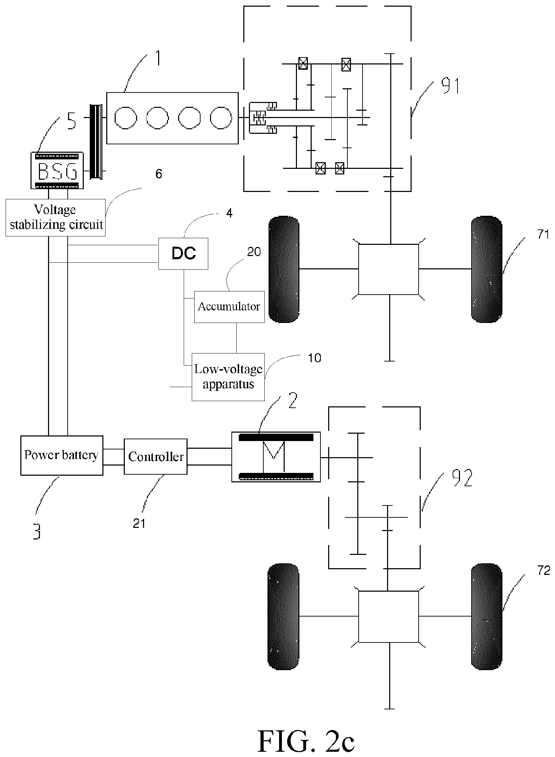

It should be noted that the voltage stabilizing circuit 6 may be arranged on an output line of the auxiliary motor 5, and the auxiliary motor 5 is respectively connected with the power motor 2, the power battery 3 and the DC-DC converter 4 through the voltage stabilizing circuit 6. As shown in Fig. 2b and Fig. 2c, in this case, the auxiliary motor 5 can output a stabilized voltage through the voltage stabilizing circuit 6 during power generation so as to charge the power battery at the stabilized voltage, supply power to the power motor 2 at the stabilized voltage and supply power to the DC-DC converter 4 at the stabilized voltage, therefore, whether the power battery 3 and the DC-DC converter 4 are connected or not, the normal work of the DC-DC converter 4 can be ensured. The voltage stabilizing circuit 6 may also be arranged on an incoming line of the DC-DC converter 4, the auxiliary motor 5 may be respectively connected with the DC-DC converter 4 and the power battery 3, and simultaneously, the power battery 3 may be connected with the DC-DC converter 4, as shown in Fig. 1 and Fig. 2a, therefore, when the power battery 3 is disconnected from the DC-DC converter 4, the voltage output to the DC-DC converter 4 when the auxiliary motor 5 generates power is still stable so as to ensure the normal work of the DC-DC converter 4.

Further, the auxiliary motor 5 can be configured to start the engine 1. That is, the auxiliary motor 5 can realize the function of starting the engine 1. For example, when the engine 1 is started, the auxiliary motor 5 can drive a crankshaft of the engine 1 to rotate so as to enable a piston of the engine 1 to reach an ignition position to realize starting of the engine 1, therefore, the auxiliary motor 5 can realize the function of a starter in related art.

As mentioned above, both the engine 1 and the power motor 2 are configured to drive the wheel 700 of the hybrid power vehicle. For example, as shown in Fig. 2a and Fig. 2b, the engine 1 and the power motor 2 drive same wheels such as a pair of front wheels 71 (including a left front wheel and a right front wheel) of the hybrid power vehicle together. For another example, not falling within the scope of the appended claims, as shown in Fig. 2c, the engine 1 can drive first wheels such as the pair of front wheels 71 (including a left front wheel and a right front wheel) of the hybrid power vehicle, and the power motor 2 can drive second wheels such as a pair of rear wheels 72 (including a left rear wheel and a right rear wheel) of the hybrid power vehicle.

In other words, when the engine 1 and the power motor 2 drive the pair of front wheels 71 together, the driving force of the power system is output to the pair of front wheels 71, and the entire vehicle adopts a two-wheel drive mode. When the engine 1 drives the pair of front wheels 71 and the power motor 2 drives the pair of rear wheels 72, the driving force of the power system is respectively output to the pair of front wheels 71 and the pair of rear wheels 72, and the entire vehicle adopts a four-wheel drive mode.

Further, in the two-wheel drive mode, as shown in Fig. 2a and Fig. 2b, the power system of a hybrid power vehicle also includes a differential 8, a main reducing gear 9 and a first transmission 91, where the engine 1 outputs power to first wheels such as the pair of front wheels 71 of the hybrid power vehicle through the clutch 7, the first transmission 91, the main reducing gear 9 and the differential 8, and the power motor 2 outputs driving force to first wheels such as the pair of front wheels 71 of the hybrid power vehicle through the main reducing gear 9 and the differential 8.

In the four-wheel drive mode, as shown in Fig. 2c, the power system of a hybrid power vehicle also includes the first transmission 91 and a second transmission 92, where the engine 1 outputs power to first wheels such as the pair of front wheels 71 of the hybrid power vehicle through the clutch 7 and the first transmission 91, and the power motor 2 outputs driving force to second wheels such as the pair of rear wheels 72 of the hybrid power vehicle through the second transmission 92.

The clutch 7 and the first transmission 91 may be integrated.

In the embodiment of the present invention, the generating voltage of the auxiliary motor 5 is generally connected to two ends of the power battery 3, therefore, when the power battery 3 is connected with the DC-DC converter 4, the voltage input to the DC-DC converter 4 is stable. When the power battery 3 is disconnected from the DC-DC converter 4 due to failure or damage, the AC output by the auxiliary motor 5 during power generation needs to be controlled. That is, the voltage stabilizing circuit 6 can be configured to perform voltage stabilizing treatment on the DC output to the DC-DC converter 4 when the auxiliary motor 5 generates power.

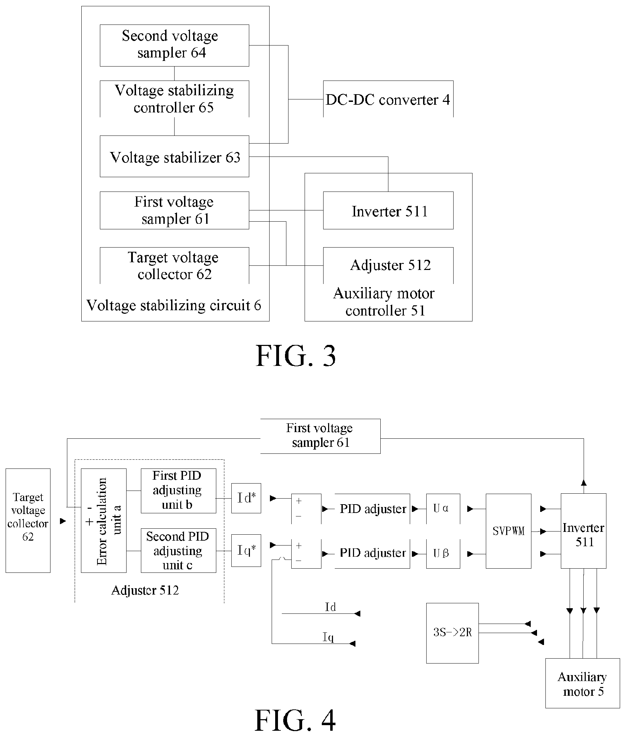

According to the invention, as shown in Fig. 3, the auxiliary motor 5 includes an auxiliary motor controller 51, the auxiliary motor controller 51 includes an inverter 511 and an adjuster 512, and the adjuster 512 is configured to output a first adjusting signal and a second adjusting signal according to an output signal of the voltage stabilizing circuit 6 when the power battery 3 is disconnected from the DC-DC converter 4 so as to stabilize the DC bus voltage output by the inverter 511, where the first adjusting signal is configured to adjust the d-axis current of the auxiliary motor 5, and the second adjusting signal is configured to adjust the q-axis current of the auxiliary motor 5.

Further, in some embodiments, as shown in Fig. 3, the voltage stabilizing circuit 6 includes a first voltage sampler 61 and a target voltage collector 62. The first voltage sampler 61 is configured to sample the DC bus voltage output by the inverter 511 to obtain a first voltage sampling value and output the first voltage sampling value to the adjuster 512, and the target voltage collector 62 acquires a target reference voltage and sends the target reference voltage to the adjuster 512. The adjuster 512 is configured to output the first adjusting signal and the second adjusting signal according to a voltage difference value between the target reference voltage and the first voltage sampling value. The output signal of the voltage stabilizing circuit 6 includes the first voltage sampling value and the target reference voltage.

Specifically, the auxiliary motor controller 51 is connected with the DC-DC converter 4 through the voltage stabilizing circuit 6. The auxiliary motor controller 51 outputs the DC bus voltage through the inverter 511, and the first voltage sampler 61 is configured to sample the DC bus voltage output by the inverter 511 to obtain a first voltage sampling value and output the first voltage sampling value to the adjuster 512. The target voltage collector 62 acquires the target reference voltage and sends the target reference voltage to the adjuster 512, the adjuster 512 outputs the first adjusting signal and the second adjusting signal according to the voltage difference value between the target reference voltage and the first voltage sampling value, to adjust the d-axis current of the auxiliary motor 5 by the first adjusting signal, and adjust the q-axis current of the auxiliary motor 5 by the second adjusting signal, so that when the power battery 3 is disconnected from the DC-DC converter 4, the auxiliary motor controller 51 controls the inverter 511 according to the d-axis current and the q-axis current of the auxiliary motor 5 to stabilize the DC bus voltage output by the inverter 511.

In some examples, a PWM (Pulse Width Modulation) technology can be adopted to control the inverter 511 to stabilize the DC bus voltage output by the inverter 511. As shown in Fig. 4, the adjuster 512 includes an error calculation unit a, a first PID adjusting unit b and a second PID adjusting unit c.

The error calculation unit a is respectively connected with the first voltage sampler 61 and the target voltage collector 62 and is configured to acquire a voltage difference value between the target reference voltage and the first voltage sampling value. The first PID adjusting unit b is connected with the error calculation unit a and adjusts the voltage difference value between the target reference voltage and the first voltage sampling value to output a first adjusting signal. The second PID adjusting unit c is connected with the error calculation unit a and adjusts the voltage difference value between the target reference voltage and the first voltage sampling value to output a second adjusting signal.

Specifically, as shown in Fig. 4, the first voltage sampler 61 samples the DC bus voltage output by the inverter 511 in real time to obtain the first voltage sampling value and outputs the first voltage sampling value to the error calculation unit a, and the target voltage collector 62 acquires the target reference voltage and outputs the target reference voltage to the error calculation unit a. The error calculation unit a acquires the voltage difference value between the target reference voltage and the first voltage sampling value and respectively inputs the difference value to the first PID adjusting unit b and the second PID adjusting unit c, the first PID adjusting unit b outputs the first adjusting signal (Id* in Fig. 4), and the second PID adjusting unit c outputs the second adjusting signal (Iq* in Fig. 4). In this case, the three-phase current output by the auxiliary motor 5 is converted into the d-axis current Id and the q-axis current Iq in a dq coordinate system by 3S/2R conversion, difference values between Id* and Id as well as between Iq* and Iq are respectively acquired, and the difference values are controlled respectively by the corresponding PID adjusters to obtain the α-axis voltage Uα of the auxiliary motor 5 and the β-axis voltage Uβ of the auxiliary motor 5. The Uα and the Uβ are input to an SVPWM module to output a three-phase duty ratio, the inverter 511 is controlled by the duty ratio, and the d-axis current Id and the q-axis current Iq output by the auxiliary motor 5 are adjusted by the inverter 511, so that the adjusted d-axis current of the auxiliary motor is adjusted again by the first control signal, and the q-axis current of the auxiliary motor is adjusted again by the second adjusting signal. Therefore, closed-loop control on the d-axis current and the q-axis current of the auxiliary motor is formed, and the DC bus voltage output by the inverter 511 can be stabilized by the closed-loop control. That is, the DC voltage output to the DC-DC converter 4 when the auxiliary motor 5 generates power can be stabilized.

It should be noted that the DC voltage output by the inverter 511 in the auxiliary motor controller 51 has a certain correlation with the counter electromotive force output by the auxiliary motor 5. In order to ensure the control efficiency, the voltage output by the inverter 511 can be set to be 3/2 of a phase voltage (i.e., the maximum phase voltage in a drive state is 2/3 of the DC bus voltage). Therefore, the DC voltage output by the inverter 511 has a certain relationship with the rotation speed of the auxiliary motor 5. When the rotation speed of the auxiliary motor 5 is higher, the DC voltage output by the inverter 511 is higher; and when the rotation speed of the auxiliary motor 5 is lower, the DC voltage output by the inverter 511 is lower.

Further, in order to ensure that the DC voltage input to the DC-DC converter 4 is in a preset voltage interval, in some embodiments of the present invention, as shown in Fig. 3, the voltage stabilizing circuit 6 can also include a voltage stabilizer 63, a second voltage sampler 64 and a voltage stabilizing controller 65.

The voltage stabilizer 63 is connected to the DC output end of the inverter 511 and performs voltage stabilizing treatment on the DC bus voltage output by the inverter 511, and the output end of the voltage stabilizer 63 is connected with the input end of the DC-DC converter 4. The second voltage sampler 64 samples the output voltage of the voltage stabilizer 63 to obtain a second voltage sampling value. The voltage stabilizing controller 65 is respectively connected with the voltage stabilizer 63 and the second voltage sampler 64 and is configured to control the output voltage of the voltage stabilizer 63 according to the preset reference voltage and the second voltage sampling value so as to enable the output voltage of the voltage stabilizer 63 to be in the preset voltage interval.

In some examples, the voltage stabilizer 63 may adopt a switch type voltage stabilizing circuit, such as a BOOST circuit, which not only can increase the voltage but also has high control accuracy. A switch device in the BOOST circuit may adopt a silicon carbide MOSFET, such as Infineon's IMW120R45M1 which can withstand a voltage of 1200 V, has the internal resistance of 45 mΩ, has the characteristics of high voltage resistance, small internal resistance and good thermal conductivity, and has the loss several tens of times smaller than that of a highspeed IGBT with the same specification. A drive chip of the voltage stabilizer 63 may adopt Infineon's 1EDI60N12AF which adopts no-magnetic-core transformer isolation to ensure safe and reliable control. It can be understood that the drive chip can generate a drive signal.

In some other examples, the voltage stabilizer 63 may adopt a BUCK-BOOST circuit which can reduce the voltage during high rotation speed of the motor and increase the voltage during low rotation speed of the motor and has high control accuracy.

In some further examples, the voltage stabilizer 63 may also adopt a linear voltage stabilizing circuit or a three-terminal voltage stabilizing circuit (such as LM317 and 7805).

It can be understood that in order to facilitate the circuit design, the circuit structure of the first voltage sampler 61 may be the same as the circuit structure of the second voltage sampler 64. For example, each of the first voltage sampler 61 and the second voltage sampler 64 may include a differential voltage circuit which has the characteristics of high accuracy and convenient adjustment of magnification.

Optionally, the voltage stabilizing controller 65 may adopt a PWM dedicated modulation chip SG3525 which has the characteristics of being small in size, simple in control and capable of outputting stable PWM waves.

For example, the work flow of the power system of a hybrid power vehicle is as follows: the second voltage sampler 64 samples the output voltage of the voltage stabilizer 63 to obtain a second voltage sampling value and outputs the second voltage sampling value to a chip SG3525, the chip SG3525 can set a reference voltage and compare the reference voltage with the second voltage sampling value, then two paths of PWM waves can be generated in combination with triangular waves generated by the chip SG3525, and the voltage stabilizer 63 is controlled by the two paths of PWM waves to enable the voltage output to the DC-DC converter 4 by the voltage stabilizer 63 to be in the preset voltage interval (such as 11-13 V), thereby ensuring the normal work of a low-voltage load in the hybrid power vehicle.

It should be noted that if the output DC bus voltage is too low, the second voltage sampling value is very small, and the SG3525 can emit PWM waves with a larger duty ratio to increase the voltage.

Therefore, the auxiliary motor 5 and the DC-DC converter 4 have a separate voltage stabilizing power supply channel. When the power battery 3 has a fault and is disconnected from the DC-DC converter 4, the separate voltage stabilizing power supply channel of the auxiliary motor 5 and the DC-DC converter 4 can ensure the low-voltage power utilization of the entire vehicle and ensure that the entire vehicle runs in a pure fuel mode, thereby increasing the driving mileage of the entire vehicle.

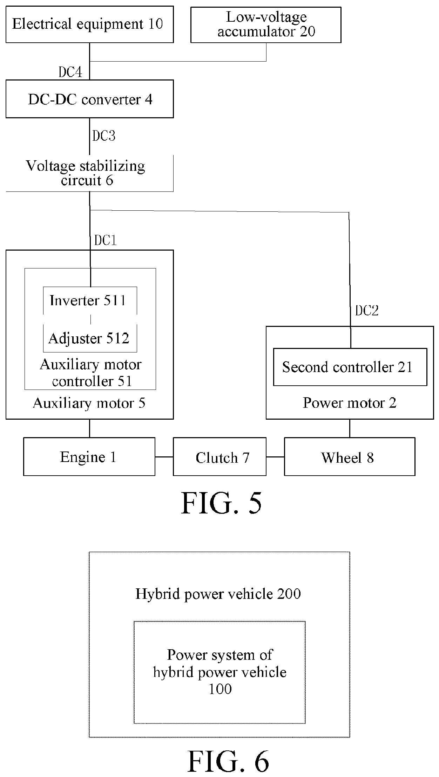

In a specific embodiment of the present invention, as shown in Fig. 5, when the power battery 3 is damaged and disconnected from the DC-DC converter 4, the voltage stabilizing circuit 6 is connected to the incoming end of the DC-DC converter 4.

The power motor 2 also includes a second controller 21, and the auxiliary motor controller 51 is connected with the second controller 21 and is connected with the DC-DC converter 4 through the voltage stabilizing circuit 6. The auxiliary motor 5 generates AC during power generation, and the inverter 511 can convert the AC generated by the auxiliary motor 5 during power generation into high-voltage DC such as 600 V high-voltage DC to supply power to at least one of the power motor 2 and the DC-DC converter 4.

It can be understood that the second controller 21 may have a DC-AC conversion unit, and the DC-AC conversion unit can convert the high-voltage DC output by the inverter 511 into AC to supply power to the power motor 2.

Specifically, as shown in Fig. 5, the inverter 511 of the auxiliary motor controller 51 has a first DC end DC1, the second controller 21 has a second DC end DC2, and the DC-DC converter 4 has a third DC end DC3. The first DC end DC1 of the auxiliary motor controller 51 is connected with the third DC end DC3 of the DC-DC converter 4 through the voltage stabilizing circuit 6 to supply a stabilized voltage to the DC-DC converter 4, and the DC-DC converter 4 can perform DC-DC conversion on the DC after voltage stabilizing. Furthermore, the inverter 511 of the auxiliary motor controller 51 also can output high-voltage DC to the second controller 21 through the first DC end DC1 to supply power to the power motor 2.

Further, as shown in Fig. 5, the DC-DC converter 4 is also respectively connected with electrical equipment 10 and a low-voltage accumulator 20 in the hybrid power vehicle to supply power to the electrical equipment 10 and the low-voltage accumulator 20, and the low-voltage accumulator 20 is also connected with the electrical equipment 10.

Specifically, as shown in Fig. 5, the DC-DC converter 4 also has a fourth DC end DC4, and the DC-DC converter 4 can convert the high-voltage DC output by the auxiliary motor 5 through the auxiliary motor controller 51 into low-voltage DC and output the low-voltage DC through the fourth DC end DC4. The fourth DC end DC4 of the DC-DC converter 4 is connected with the electrical equipment 10 to supply power to the electrical equipment 10, where the electrical equipment 10 may be low-voltage electrical equipment, including but not limited to, a vehicle lamp and a radio. The fourth DC end DC4 of the DC-DC converter 4 may also be connected with the low-voltage accumulator 20 to charge the low-voltage accumulator 20. The low-voltage accumulator 20 is connected with the electrical equipment 10 to supply power to the electrical equipment 10. Particularly, when the auxiliary motor 5 stops generating power, the low-voltage accumulator 20 can supply power to the electrical equipment 10 to ensure the low-voltage power utilization of the entire vehicle and ensure that the entire vehicle runs in a pure fuel mode, thereby increasing the driving mileage of the entire vehicle.

It should be noted that in the embodiments of the present invention, the low voltage may refer to a voltage of 12 V or 24 V, the high voltage may refer to a voltage of 600 V, the preset voltage interval may refer to 11-13 V or 23-25 V, but the present invention is not limited thereto.

In conclusion, the power system of a hybrid power vehicle according to the embodiments of the present invention not only can maintain the low-speed electric balance and low-speed smoothness of the entire vehicle, but also can ensure the normal work of the DC-DC converter when the power battery is disconnected from the DC-DC converter due to failure or damage, and is high in control accuracy and low in loss.

Further, the present invention also provides a hybrid power vehicle.

Fig. 6 is a structure block diagram of a hybrid power vehicle according to an embodiment of the present invention. As shown in Fig. 6, the hybrid power vehicle 200 includes the power system 100 of the hybrid power vehicle.

The hybrid power vehicle of the present invention not only can maintain the low-speed electric balance and low-speed smoothness of the entire vehicle to fully utilize the mechanical energy of the motor, but also can stabilize the input voltage of the DC-DC converter to ensure the normal work of the DC-DC converter, and is low in loss and high in efficiency.

In the description of the present invention, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, terms "first" and "second" are used only for description purposes, and shall not be understood as indicating or suggesting relative importance or implicitly indicating a quantity of indicated technical features. Therefore, a feature restricted by "first" or "second" may explicitly indicate or implicitly include at least one such feature. In the description of the present invention, unless otherwise specifically limited, "multiple" means at least two, for example, two or three.

In the present disclosure, it should be noted that unless otherwise clearly specified and limited, the terms "mounted", "connected", "connection", and "fixed" should be understood in a broad sense. For example, a connection may be a fixed connection, a detachable connection, or an integral connection; may be a mechanical connection or an electrical connection; may be a direct connection or an indirect connection by means of an intermediate medium; or may be internal communication between two elements or interaction relationship between two elements, unless otherwise clearly limited. A person of ordinary skill in the art may understand specific meanings of the terms in the present invention according to specific situations.

In the present invention, unless explicitly specified or limited otherwise, a first characteristic "on" or "under" a second characteristic may be the first characteristic in direct contact with the second characteristic, or the first characteristic in indirect contact with the second characteristic by using an intermediate medium. Moreover, that the first feature is "above", "over", and " on" the second feature may be that the first feature is right above the second feature or at an inclined top of the second feature, or may merely indicate that the horizontal height of the first feature is higher than that of the second feature. That the first feature is "below", "under", and "beneath" the second feature may be that the first feature is right below the second feature or at an inclined bottom of the second feature, or may merely indicate that the horizontal height of the first feature is lower than that of the second feature.

In the description of the specification, the description made with reference to terms such as "one embodiment", "some embodiments", "example", "specific example", or "some examples" means that a specific characteristic, structure, material or feature described with reference to the embodiment or example is included in at least one embodiment or example of the present invention. In this specification, exemplary descriptions of the foregoing terms do not necessarily refer to a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in the specification, as long as they do not conflict each other.

## Claims

1. A power system of a hybrid power vehicle, comprising:
an engine (1), outputting power to a wheel (700) of the hybrid power vehicle through a clutch (7);
a power motor (2), configured to output driving force to the wheel (700) of the hybrid power vehicle;
a power battery (3), configured to supply power to the power motor (2);
a DC-DC converter (4);
**characterized in** the power system further comprising:
an auxiliary motor (5), connected with the engine (1) and respectively connected with the power motor (2), the DC-DC converter (4), and the power battery (3); and
a voltage stabilizing circuit (6), connected between the auxiliary motor (5) and the DC-DC converter (4) and configured to perform voltage stabilizing treatment on the DC output to the DC-DC converter (4) when the auxiliary motor (5) generates power, wherein the auxiliary motor (5) comprises an auxiliary motor controller (51), the auxiliary motor controller (51) comprises an inverter (511) and an adjuster (512), and the adjuster (512) is configured to output a first adjusting signal and a second adjusting signal according to an output signal of the voltage stabilizing circuit (6) when the power battery (3) is disconnected from the DC-DC converter (4) to stabilize the DC bus voltage output by the inverter (511), wherein the first adjusting signal is configured to adjust the d-axis current of the auxiliary motor (5), and the second adjusting signal is configured to adjust the q-axis current of the auxiliary motor (5),
wherein the inverter (511) of the auxiliary motor controller (51) has a first DC end (DC1), and the DC-DC converter (4) has a third DC end (DC3) and a fourth DC end (DC4); the first DC end (DC1) of the auxiliary motor controller (51) is connected with the third DC end (DC3) of the DC-DC converter (4) through the voltage stabilizing circuit (6); the fourth DC end (DC4) of the DC-DC converter (4) is connected with electric equipment (10) and configured to supply power to the electrical equipment (10).

2. The power system of a hybrid power vehicle according to claim 1, wherein the voltage stabilizing circuit (6) comprises a first voltage sampler (61) and a target voltage collector (62), the first voltage sampler (61) is configured to sample the DC bus voltage output by the inverter (511) to obtain a first voltage sampling value and outputs the first voltage sampling value to the adjuster (512), and the target voltage collector (62) is configured to acquire a target reference voltage and sends the target reference voltage to the adjuster; and
the adjuster (512) is configured to output the first adjusting signal and the second adjusting signal according to a voltage difference value between the target reference voltage and the first voltage sampling value; wherein
the output signal of the voltage stabilizing circuit (6) comprises the first voltage sampling value and the target reference voltage.

3. The power system of a hybrid power vehicle according to claim 2, wherein the voltage stabilizing circuit (6) further comprises:
a voltage stabilizer (63), connected with the DC output end of the inverter (511) and configured to perform voltage stabilizing treatment on the DC bus voltage output by the inverter (511), wherein the output end of the voltage stabilizer (63) is connected with the input end of the DC-DC converter (4);
a second voltage sampler (64) configured to sample the output voltage of the voltage stabilizer (63) to obtain a second voltage sampling value; and
a voltage stabilizing controller (65), respectively connected with the voltage stabilizer (63) and the second voltage sampler (64) and configured to control the output voltage of the voltage stabilizer (63) according to the preset reference voltage and the second voltage sampling value so as to enable the output voltage of the voltage stabilizer (63) to be in a preset voltage interval.

4. The power system of a hybrid power vehicle according to claim 3, wherein the voltage stabilizer (63) comprises one of a BOOST circuit, a BUCK-BOOST circuit, a linear voltage stabilizing circuit, or a three-terminal voltage stabilizing circuit.

5. The power system of a hybrid power vehicle according to claim 3, wherein the circuit structure of the first voltage sampler (61) is the same as the circuit structure of the second voltage sampler (64), and/or
wherein each of the first voltage sampler (61) and the second voltage sampler (64) comprises a differential voltage circuit.

6. The power system of a hybrid power vehicle according to claim 2, wherein the adjuster (512) comprises:
an error calculation unit, respectively connected with the first voltage sampler (61) and the target voltage collector (62) and configured to acquire a voltage difference value between the target reference voltage and the first voltage sampling value;
a first PID adjusting unit, connected with the error calculation unit and configured to adjust the voltage difference value between the target reference voltage and the first voltage sampling value to output a first adjusting signal; and
a second PID adjusting unit, connected with the error calculation unit and configured to adjust the voltage difference value between the target reference voltage and the first voltage sampling value to output a second adjusting signal.

7. The power system of a hybrid power vehicle according to claim 1, wherein the auxiliary motor (5) is a BSG motor.

8. The power system of a hybrid power vehicle according to claim 1, wherein when driven by the engine (1) to generate power, the auxiliary motor (5) is configured to realize at least one of charging the power battery (3), to supply power to the power motor (2) and to supply power to the DC-DC converter (4).

9. The power system of a hybrid power vehicle according to claim 1,
wherein the voltage stabilizing circuit (6) is arranged on an incoming line of the DC-DC converter (4), and the auxiliary motor (5) is respectively connected with the DC-DC converter (4) and the power battery (3)..

10. The power system of a hybrid power vehicle according to claim 1, wherein the power motor (2) comprises a second controller (21) comprising a DC-AC conversion unit to covert a high-voltage DC output by the inverter (511) into AC to supply power to the power motor (2).

11. The power system of a hybrid power vehicle according to any one of claims 1 to 10, wherein the engine (1) and the power motor (2) drive a same wheel of the hybrid power vehicle together.

12. A hybrid power vehicle, comprising the power system of a hybrid power vehicle according to any one of claims 1 to 11.

## Patentansprüche

1. Antriebssystem für ein Fahrzeug mit Hybridantrieb, umfassend:
einen Motor (1), der Leistung über eine Kupplung (7) an ein Rad (700) des Fahrzeugs mit Hybridantrieb abgibt;
einen Leistungsmotor (2), der dazu ausgestaltet ist, eine Antriebskraft an das Rad (700) des Fahrzeugs mit Hybridantrieb abzugeben;
eine Leistungsbatterie (3), die dazu ausgestaltet ist, den Leistungsmotor (2) mit einer Leistung zu versorgen;
einen Gleichstrom-Gleichstrom-Wandler (4);
**dadurch gekennzeichnet, dass** das Antriebssystem ferner Folgendes umfasst:
einen Hilfsmotor (5), der mit dem Motor (1) verbunden ist und jeweils mit dem Leistungsmotor (2), dem Gleichstrom-Gleichstrom-Wandler (4) und der Leistungsbatterie (3) verbunden ist; und
eine Spannungsstabilisierungsschaltung (6), die zwischen dem Hilfsmotor (5) und dem Gleichstrom-Gleichstrom-Wandler (4) geschaltet und dazu ausgestaltet ist, eine Spannungsstabilisierungsbehandlung des Gleichstroms vorzunehmen, der an den Gleichstrom-Gleichstrom-Wandler (4) abgegeben wird, wenn der Hilfsmotor (5) Leistung erzeugt, wobei der Hilfsmotor (5) eine Hilfsmotorsteuerung (51) umfasst, die Hilfsmotorsteuerung (51) einen Wechselrichter (511) und einen Einsteller (512) umfasst und der Einsteller (512) dazu ausgestaltet ist, gemäß einem Ausgangssignal der Spannungsstabilisierungsschaltung (6) ein erstes Einstellsignal und ein zweites Einstellsignal auszugeben, wenn die Leistungsbatterie (3) von dem Gleichstrom-Gleichstrom-Wandler (4) getrennt ist, um die durch den Wechselrichter (511) abgegebene Gleichstrom-Busspannung zu stabilisieren, wobei das erste Einstellsignal dazu ausgestaltet ist, den d-Achsen-Strom des Hilfsmotors (5) einzustellen und das zweite Einstellsignal dazu ausgestaltet ist, den q-Achsen-Strom des Hilfsmotors (5) einzustellen,
wobei der Wechselrichter (511) der Hilfsmotorsteuerung (51) ein erstes Gleichstrom-Ende (DC1) aufweist und der Gleichstrom-Gleichstrom-Wandler (4) ein drittes Gleichstrom-Ende (DC3) und ein viertes Gleichstrom-Ende (DC4) aufweist; das erste Gleichstrom-Ende (DC1) der Hilfsmotorsteuerung (51) über die Spannungsstabilisierungsschaltung (6) mit dem dritten Gleichstrom-Ende (DC3) des Gleichstrom-Gleichstrom-Wandlers (4) verbunden ist; und das vierte Gleichstrom-Ende (DC4) des Gleichstrom-Gleichstrom-Wandlers (4) mit einer elektrischen Ausrüstung (10) verbunden und dazu ausgestaltet ist, die elektrische Ausrüstung (10) mit Leistung zu versorgen.

2. Antriebssystem eines Fahrzeugs mit Hybridantrieb nach Anspruch 1, wobei die Spannungsstabilisierungsschaltung (6) einen ersten Spannungsabtaster (61) und einen Sollspannungskollektor (62) umfasst, wobei der erste Spannungsabtaster (61) dazu ausgestaltet ist, die durch den Wechselrichter (511) ausgegebene Gleichstrom-Busspannung abzutasten, um einen ersten Spannungsabtastwert zu erhalten, und den ersten Spannungsabtastwert an den Einsteller (512) ausgibt, und der Sollspannungskollektor (62) dazu ausgestaltet ist, eine Soll-Referenzspannung zu erfassen, und die Soll-Referenzspannung an den Einsteller sendet; und
der Einsteller (512) dazu ausgestaltet ist, das erste Einstellsignal und das zweite Einstellsignal gemäß einem Spannungsdifferenzwert zwischen der Soll-Referenzspannung und dem ersten Spannungsabtastwert auszugeben; wobei
das Ausgangssignal der Spannungsstabilisierungsschaltung (6) den ersten Spannungsabtastwert und die Soll-Referenzspannung umfasst.

3. Antriebssystem eines Fahrzeugs mit Hybridantrieb nach Anspruch 2, wobei die Spannungsstabilisierungsschaltung (6) ferner Folgendes umfasst:
einen Spannungsstabilisator (63), der mit dem Gleichstrom-Ausgangsende des Wechselrichters (511) verbunden und dazu ausgestaltet ist, eine Spannungsstabilisierungsbehandlung der durch den Wechselrichter (511) abgegebenen Gleichstrom-Busspannung vorzunehmen, wobei das Ausgangsende des Spannungsstabilisators (63) mit dem Eingangsende des Gleichstrom-Gleichstrom-Wandlers (4) verbunden ist;
einen zweiten Spannungsabtaster (64), der dazu ausgestaltet ist, die Ausgangsspannung des Spannungsstabilisators (63) abzutasten, um einen zweiten Spannungsabtastwert zu erhalten; und
eine Spannungsstabilisierungssteuerung (65), die jeweils mit dem Spannungsstabilisator (63) und dem zweiten Spannungsabtaster (64) verbunden und dazu ausgestaltet ist, die Ausgangsspannung des Spannungsstabilisators (63) gemäß der voreingestellten Referenzspannung und dem zweiten Spannungsabtastwert so zu regeln, dass die Ausgangsspannung des Spannungsstabilisators (63) in einem voreingestellten Spannungsintervall zu liegen kommt.

4. Antriebssystem eines Fahrzeugs mit Hybridantrieb nach Anspruch 3, wobei der Spannungsstabilisator (63) eine aus einer BOOST-Schaltung, einer BUCK-BOOST-Schaltung, einer linearen Spannungsstabilisierungsschaltung oder einer Dreipol-Spannungsstabilisierungsschaltung umfasst.

5. Antriebssystem eines Fahrzeugs mit Hybridantrieb nach Anspruch 3, wobei die Schaltungsstruktur des ersten Spannungsabtasters (61) die gleiche wie die Schaltungsstruktur des zweiten Spannungsabtasters (64) ist und/oder wobei jeder aus dem ersten Spannungsabtaster (61) und dem zweiten Spannungsabtaster (64) eine Differenzspannungsschaltung umfasst.

6. Antriebssystem eines Fahrzeugs mit Hybridantrieb nach Anspruch 2, wobei der Einsteller (512) Folgendes umfasst:
eine Fehlerberechnungseinheit, die jeweils mit dem ersten Spannungsabtaster (61) und dem Sollspannungskollektor (62) verbunden und dazu ausgestaltet ist, einen Spannungsdifferenzwert zwischen der Soll-Referenzspannung und dem ersten Spannungsabtastwert zu erfassen;
eine erste PID-Einstelleinheit, die mit der Fehlerberechnungseinheit verbunden und dazu ausgestaltet ist, den Spannungsdifferenzwert zwischen der Soll-Referenzspannung und dem ersten Spannungsabtastwert einzustellen, um ein erstes Einstellsignal auszugeben; und
eine zweite PID-Einstelleinheit, die mit der Fehlerberechnungseinheit verbunden und dazu ausgestaltet ist, den Spannungsdifferenzwert zwischen der Soll-Referenzspannung und dem ersten Spannungsabtastwert einzustellen, um ein zweites Einstellsignal auszugeben.

7. Antriebssystem eines Fahrzeugs mit Hybridantrieb nach Anspruch 1, wobei es sich bei dem Hilfsmotor (5) um einen BSG-Motor handelt.

8. Antriebssystem eines Fahrzeugs mit Hybridantrieb nach Anspruch 1, wobei der Hilfsmotor (5), wenn er durch den Motor (1) zur Leistungserzeugung angetrieben wird, dazu ausgestaltet ist, mindestens eines aus einem Laden der Leistungsbatterie (3), Versorgen des Leistungsmotors (2) mit Leistung und Versorgen des Gleichstrom-Gleichstrom-Wandlers (4) mit Leistung auszuführen.

9. Antriebssystem eines Fahrzeugs mit Hybridantrieb nach Anspruch 1,
wobei die Spannungsstabilisierungsschaltung (6) an einer Eingangsleitung des Gleichstrom-Gleichstrom-Wandlers (4) angeordnet ist und der Hilfsmotor (5) jeweils mit dem Gleichstrom-Gleichstrom-Wandler (4) und der Leistungsbatterie (3) verbunden ist.

10. Antriebssystem eines Fahrzeugs mit Hybridantrieb nach Anspruch 1, wobei der Leistungsmotor (2) eine zweite Steuerung (21) umfasst, die eine Gleichstrom-Wechselstrom-Umwandlungseinheit umfasst, um einen durch den Wechselrichter (511) abgegebenen Hochspannungsgleichstrom in Wechselstrom umzuwandeln, um den Leistungsmotor (2) mit Leistung zu versorgen.

11. Antriebssystem eines Fahrzeugs mit Hybridantrieb nach einem der Ansprüche 1 bis 10, wobei der Motor (1) und der Leistungsmotor (2) gemeinsam dasselbe Rad des Fahrzeugs mit Hybridantrieb antreiben.

12. Fahrzeug mit Hybridantrieb, welches das Antriebssystem für ein Fahrzeug mit Hybridantrieb nach einem der Ansprüche 1 bis 11 umfasst.

## Revendications

1. Système d'alimentation d'un véhicule hybride, comprenant :
un moteur à combustible (1), alimentant une roue (700) du véhicule hybride par l'intermédiaire d'un embrayage (7) ;
un moteur d'alimentation (2), configuré pour fournir une force motrice à la roue (700) du véhicule hybride ;
une batterie d'alimentation (3), configurée pour alimenter le moteur d'alimentation (2) ;
un convertisseur CC-CC (4) ;
**caractérisé en ce que** le système d'alimentation comprend en outre :
un moteur auxiliaire (5), connecté au moteur à combustible (1) et connecté respectivement au moteur d'alimentation (2), au convertisseur CC-CC (4) et à la batterie d'alimentation (3) ; et
un circuit de stabilisation de tension (6), connecté entre le moteur auxiliaire (5) et le convertisseur CC-CC (4) et configuré pour effectuer un traitement de stabilisation de tension sur le CC émis vers le convertisseur CC-CC (4) lorsque le moteur auxiliaire (5) génère de l'énergie, le moteur auxiliaire (5) comprenant un contrôleur de moteur auxiliaire (51), le contrôleur de moteur auxiliaire (51) comprenant un onduleur (511) et un ajusteur (512), et l'ajusteur (512) étant configuré pour émettre un premier signal de réglage et un deuxième signal de réglage en fonction d'un signal de sortie du circuit de stabilisation de tension (6) lorsque la batterie d'alimentation (3) est déconnectée du convertisseur CC-CC (4) afin de stabiliser la tension de bus CC émise par l'onduleur (511), le premier signal de réglage étant configuré pour régler le courant de l'axe d du moteur auxiliaire (5), et le deuxième signal de réglage étant configuré pour régler le courant de l'axe q du moteur auxiliaire (5),
l'onduleur (511) du contrôleur de moteur auxiliaire (51) ayant une première extrémité CC (DC1), et le convertisseur CC-CC (4) ayant une troisième extrémité CC (DC3) et une quatrième extrémité CC (DC4) ; la première extrémité CC (DC1) du contrôleur de moteur auxiliaire (51) étant connectée à la troisième extrémité CC (DC3) du convertisseur CC-CC (4) par l'intermédiaire du circuit de stabilisation de tension (6) ; la quatrième extrémité CC (DC4) du convertisseur CC-CC (4) étant connectée à l'équipement électrique (10) et configurée pour alimenter l'équipement électrique (10).

2. Système d'alimentation d'un véhicule hybride selon la revendication 1, dans lequel le circuit de stabilisation de tension (6) comprend un premier échantillonneur de tension (61) et un collecteur de tension cible (62), le premier échantillonneur de tension (61) est configuré pour échantillonner la tension de bus CC émise par l'onduleur (511) afin d'obtenir une première valeur d'échantillonnage de tension et envoie la première valeur d'échantillonnage de tension à l'ajusteur (512), et le collecteur de tension cible (62) est configuré pour acquérir une tension de référence cible et envoie la tension de référence cible à l'ajusteur ; et
l'ajusteur (512) est configuré pour émettre le premier signal de réglage et le deuxième signal de réglage en fonction d'une valeur de différence de tension entre la tension de référence cible et la première valeur d'échantillonnage de tension ;
le signal de sortie du circuit de stabilisation de tension (6) comprenant la première valeur d'échantillonnage de tension et la tension de référence cible.

3. Système d'alimentation d'un véhicule hybride selon la revendication 2, dans lequel le circuit de stabilisation de tension (6) comprend en outre :
un stabilisateur de tension (63), connecté à l'extrémité de sortie CC de l'onduleur (511) et configuré pour effectuer un traitement de stabilisation de tension sur la tension de bus CC émise par l'onduleur (511), l'extrémité de sortie du stabilisateur de tension (63) étant connectée à l'extrémité d'entrée du convertisseur CC-CC (4) ;
un deuxième échantillonneur de tension (64) configuré pour échantillonner la tension de sortie du stabilisateur de tension (63) afin d'obtenir une deuxième valeur d'échantillonnage de tension ; et
un contrôleur de stabilisation de tension (65), connecté respectivement au stabilisateur de tension (63) et au deuxième échantillonneur de tension (64) et configuré pour contrôler la tension de sortie du stabilisateur de tension (63) en fonction de la tension de référence prédéfinie et de la deuxième valeur d'échantillonnage de tension de manière à permettre à la tension de sortie du stabilisateur de tension (63) de se situer dans un intervalle de tension prédéfini.

4. Système d'alimentation d'un véhicule hybride selon la revendication 3, dans lequel le stabilisateur de tension (63) comprend un élément parmi un circuit BOOST, un circuit BUCK-BOOST, un circuit de stabilisation de tension linéaire, ou un circuit de stabilisation de tension à trois bornes.

5. Système d'alimentation d'un véhicule hybride selon la revendication 3, dans lequel la structure de circuit du premier échantillonneur de tension (61) est la même que la structure de circuit du deuxième échantillonneur de tension (64), et/ou
dans lequel le premier échantillonneur de tension (61) et le deuxième échantillonneur de tension (64) comprennent chacun un circuit de tension différentielle.

6. Système d'alimentation d'un véhicule hybride selon la revendication 2, dans lequel l'ajusteur (512) comprend :
une unité de calcul d'erreur, connectée respectivement au premier échantillonneur de tension (61) et au collecteur de tension cible (62) et configurée pour acquérir une valeur de différence de tension entre la tension de référence cible et la première valeur d'échantillonnage de tension ;
une première unité de réglage PID, connectée à l'unité de calcul d'erreur et configurée pour régler la valeur de différence de tension entre la tension de référence cible et la première valeur d'échantillonnage de tension afin d'émettre un premier signal de réglage ; et
une deuxième unité de réglage PID, connectée à l'unité de calcul d'erreur et configurée pour régler la valeur de différence de tension entre la tension de référence cible et la première valeur d'échantillonnage de tension pour émettre un deuxième signal de réglage.

7. Système d'alimentation d'un véhicule hybride selon la revendication 1, dans lequel le moteur auxiliaire (5) est un moteur BSG.

8. Système d'alimentation d'un véhicule hybride selon la revendication 1, dans lequel lorsqu'il est entraîné par le moteur à combustible (1) pour générer de l'énergie, le moteur auxiliaire (5) est configuré pour réaliser au moins une opération parmi le chargement de la batterie d'alimentation (3), l'alimentation du moteur d'alimentation (2) et l'alimentation du convertisseur CC-CC (4).

9. Système d'alimentation d'un véhicule hybride selon la revendication 1,
dans lequel le circuit de stabilisation de tension (6) est disposé sur une ligne d'entrée du convertisseur CC-CC (4), et le moteur auxiliaire (5) est respectivement connecté au convertisseur CC-CC (4) et à la batterie d'alimentation (3).

10. Système d'alimentation d'un véhicule hybride selon la revendication 1, dans lequel le moteur d'alimentation (2) comprend un deuxième contrôleur (21) comprenant une unité de conversion CC-CA pour transformer un CC haute tension émis par l'onduleur (511) en CA afin d'alimenter le moteur d'alimentation (2).

11. Système d'alimentation d'un véhicule hybride selon l'une quelconque des revendications 1 à 10, dans lequel le moteur à combustible (1) et le moteur d'alimentation (2) entraînent ensemble une même roue du véhicule hybride.

12. Véhicule hybride, comprenant le système d'alimentation d'un véhicule hybride selon l'une quelconque des revendications 1 à 11.
